# EUROPÄISCHE PATENTSCHRIFT

(11) **EP 2 527 976 B1**
(45) Veröffentlichungstag und Bekanntmachung des Hinweises auf die Patenterteilung: **19.04.2017**
(21) Anmeldenummer: 12167076.4
(22) Anmeldetag: 08.05.2012
(51) Int. Cl.: G06F 21/60, G06F 3/12, G06F 9/44, G06F 9/445

(54) **SIMULTANES SOFTWAREUPDATE**
SIMULTANEOUS SOFTWARE UPDATE
MISE À JOUR LOGICIELLE SIMULTANÉE

(30) Priorität: 24.05.2011 DE 102011102425
(43) Veröffentlichungstag der Anmeldung: 28.11.2012
(73) Patentinhaber: Heidelberger Druckmaschinen AG, 69115 Heidelberg (DE)
(72) Erfinder: Bechtel, Andreas, 69121 Heidelberg (DE); Leidel, Erik, 69123 Heidelberg (DE); Rottloff, Mario, 69151 Neckargemünd-Dilsberg (DE); Sommerlade, Bernd, 68163 Mannheim (DE); Thome, Wilhelm, 68789 St. Leon-Rot (DE)
(74) Vertreter: Haust, Christof

(56) Entgegenhaltungen:
- Rick Broida: "Take Ubuntu for a non-invasive test drive with Wubi", , 9. Mai 2007 (2007-05-09), XP002680787, Gefunden im Internet: URL:http://lifehacker.com/258936/take-ubun tu-for-a-non+invasive-test-drive-with-wubi ?tag=softwarefeaturedwindowsdownload [gefunden am 2012-07-25]

## Beschreibung

Die vorliegende Erfindung betrifft ein Verfahren zur Installation von Betriebssystemsoftware zur Steuerung von Maschinen auf einem Maschinenrechner mit mehreren Verfahrensschritten.

Heutige Steuerungsrechner für Maschinen wie z. B. Druckmaschinen weisen ein Betriebssystem auf, welches ähnlich den Betriebssystemen von gewöhnlichen PCs wie Windows, MacOS oder Linux durch aktuellere Softwareversionen ersetzt werden kann. Die aktuelleren Softwareversionen werden benötigt, um das Betriebssystem zu aktualisieren und dem Nutzer der Maschine neue Möglichkeiten zu erschließen. Bei einem PC bereitet der Austausch der Betriebssystemsoftware insofern keine größeren Probleme, als dass es problemlos möglich ist, den PC herunterzufahren, das neue Betriebssystem zu installieren und den PC wieder in Betrieb zu nehmen. Diese Prozedur nimmt jedoch einiges an Zeit in Anspruch, was bei einem Maschinenrechner zum Stillstand der Maschine führen würde. Ein Stillstand der Maschine ist jedoch für den Betreiber mit hohen Kosten verbunden, da er in dieser Zeit die Maschine nicht nutzen kann. Es ist daher für den Betreiber einer Maschine nicht hinnehmbar, den Steuerungsrechner der Maschine stillzusetzen und die Maschine während des Austauschs oder Updates der Betriebssystemsoftware nicht benutzen zu können. Des Weiteren besteht bei einem Update oder einem Austausch eines Betriebssystems immer die Gefahr, dass der Softwareaustausch misslingt und dann der alte zuverlässige Zustand des Steuerungsrechners nur mühsam oder eventuell wegen Datenverlusten gar nicht mehr hergestellt werden kann. Die von der Betriebssystemaktualisierung bekannte Vorgehensweise bei PCs eignet sich daher so gut wie nicht, um das Betriebssystem eines Maschinenrechners zu aktualisieren, selbst wenn es sich um die gleiche Betriebssystemsoftware wie bei PCs handelt.

Es ist aus der Patentanmeldung US 2010/0131746 A1 bekannt, auf einen Rechner mehrere Betriebssysteme in unterschiedlichen Partitionen zu installieren. Beim Einschalten des Rechners ist es dann möglich, mittels eines sogenannten Bootmanagers das gewünschte Betriebssystem auszuwählen um sicherzustellen, dass die für das ausgewählte Betriebssystem benötigten korrekten Dateien verwendet werden. Dieses System ermöglicht es, unterschiedliche Betriebssysteme parallel auf unterschiedlichen Partitionen zu verwenden, allerdings löst es nicht das Problem, dass beim Austausch eines Betriebssystems der Rechner abgeschaltet und während des Betriebssystemaustauschs oder -wechsels nicht zur Verfügung steht.

Des Weiteren ist aus dem Stand der Technik "Wubi" bekannt - ein Installer mit dem es ermöglicht wird, zu Testzwecken eine Linux-Distribution "Ubuntu" eingebettet in die Windows-Partition quasi als normale Windows-Software zu installieren. Ubuntu wird dabei nicht in einer eigenen Partition installiert, wird jedoch beim Starten des Rechners vom Windows- Bootmanager als eigenes Betriebssystem erkannt und geladen. Eine Lösung des Problem, dass beim Austausch eines Betriebssystems der Rechner abgeschaltet und während des Betriebssystemaustauschs oder -wechsels nicht zur Verfügung steht, bietet jedoch auch "Wubi" nicht an.

Es ist daher Aufgabe der vorliegenden Erfindung, ein Verfahren zum Austausch, Wechsel oder Update von Betriebssystemsoftware auf einem Maschinenrechner zu schaffen, welches eine möglichst kurze Stillstandzeit des Maschinenrechners und damit der Maschine zur Folge hat. Diese Aufgabe wird erfindungsgemäß durch Patentanspruch 1 gelöst. Vorteilhafte Ausgestaltungen der Erfindung sind den Unteransprüchen und den Zeichnungen zu entnehmen. Das erfindungsgemäße Verfahren zur Installation von Betriebssystemsoftware eignet sich grundsätzlich für alle Steuerungsrechner von Maschinen aber auch für normale PCs. Die Steuerungsrechner, auch Maschinenrechner genannt, sind meist sogenannte IPCs (Industriecomputer), welche mit einem bekannten Betriebssystem wie Windows oder Linux arbeiten. Um die Stillstandzeit des Maschinenrechners beim Austausch oder Update der Betriebssystemsoftware auf ein Minimum zu reduzieren, sind die nachfolgenden Verfahrensschritte vorgesehen. Zunächst kann bei laufendem Maschinenrechner und laufender Maschine eine weitere Betriebssystemsoftware zusätzlich zu der bereits auf dem Maschinenrechner laufenden Betriebssystemsoftware übertragen werden. Ebenso wird die weitere Betriebssystemsoftware auf dem Maschinenrechner bereits installiert, wenn der Maschinenrechner und die Maschine noch laufen. Nach der Installation der weiteren Betriebssystemsoftware werden die Anwenderdaten der laufenden Betriebssystemsoftware in die weitere Betriebssystemsoftware kopiert, während die Maschine und der Maschinenrechner weiterhin in Betrieb sind. Erst zum Starten der weiteren Betriebssystemsoftware muss der Betrieb der Maschine und des Maschinenrechners unterbrochen werden, indem der Maschinerechner abgeschaltet wird und der Bediener dann beim Wiedereinschalten der Maschine zwischen dem Start der alten Betriebssystemsoftware und der neu installierten weiteren Betriebssystemsoftware wählen Betriebssystemsoftware muss der Betrieb der Maschine und des Maschinenrechners unterbrochen werden, indem der Maschinerechner abgeschaltet wird und der Bediener dann beim Wiedereinschalten der Maschine zwischen dem Start der alten Betriebssystemsoftware und der neu installierten weiteren Betriebssystemsoftware wählen kann. Dies hat den großen Vorteil, dass der Stillstand des Maschinenrechners und damit der zugehörigen Maschine auf die Zeitspanne reduziert wird, welche zum Neustart des Maschinenrechners benötigt wird. Dies ist jedoch eine vielfach kürzere Zeitspanne, als diejenige, welche für die Übertragung und Installation einer neuen Betriebssystemsoftware gebraucht wird. Die weitere Betriebssystemsoftware kann dabei eine aktuelle Version der bereits laufenden Betriebssystemsoftware, ein sogenanntes Softwareupdate, sein, es kann sich jedoch auch um ein neues Betriebssystem des gleichen Softwareherstellers oder eines anderen Softwareherstellers handeln. Das erfindungsgemäße Verfahren ist somit äußerst flexibel in der Anwendung und für sämtliche Änderungen der Betriebssystemsoftware auf einem Maschinenrechner geeignet.

In einer ersten Ausgestaltung der Erfindung ist vorgesehen, dass die weitere Betriebssystemsoftware auf demselben Speichermedium wie die bereits laufende Betriebssystemsoftware installiert wird. Dies bedeutet, dass das alte Betriebssystem und das neue Betriebssystem z. B. auf ein und derselben Festplatte des Maschinenrechners installiert werden können. Es müssen daher keine zwei voneinander unabhängigen Festplatten oder Speichermedien vorhanden sein. Auf ein und demselben Speichermedium werden lediglich unterschiedliche Partitionen für die Betriebssystemsoftware angelegt. Für jede Betriebssystemsoftware wird dabei bei der Übertragung eine eigene Partition angelegt. Alle Partitionen können sich auf ein und derselben Festplatte befinden.

Vorteilhafterweise ist außerdem vorgesehen, dass die Auswahlmöglichkeit beim Wiedereinschalten der Maschine mehr als zwei Betriebssystemsoftwareversionen umfasst. Dies hat den großen Vorteil, dass nicht nur die gerade aufgespielte weitere Betriebssystemsoftware und die aktuell laufende Betriebssystemsoftware ausgewählt werden können, sondern der Bediener der Maschine kann sämtliche auf dem Speichermedium des Maschinenrechners vorhandene Betriebssystemsoftwareversionen, welche nicht gelöscht worden sind, auswählen, so dass die Anzahl und Auswahlmöglichkeit der Betriebssystemsoftwareversionen ausschließlich durch die Größe des Speicherplatzes des Maschinenrechners beschränkt sind.

In einer weiteren Ausgestaltung der Erfindung ist vorgesehen, dass die weitere Betriebssystemsoftware von einem Fernwartungsrechner aus über eine Internetverbindung an den Maschinenrechner übertragen wird. Aufgrund der unterschiedlichen Anzahl von Versionen von Maschinen muss die Betriebssystemsoftware auf dem Maschinenrechner häufig an die jeweilige Maschine angepasst werden. Damit jeder Maschinenrechner die an die Maschine angepasste korrekte Softwareversion erhält, sollte die Übertragung eines weiteren Betriebssystems von Fachpersonal durchgeführt werden. Um einen Einsatz des Personals vor Ort zu vermeiden, kann die weitere Version des Betriebssystems von einem Verwaltungsrechner beim Hersteller der Maschine über das Internet an den Maschinenrechner übertragen und dort aufgespielt werden. Dieser Verwaltungsrechner kann gleichzeitig ein Fernwartungsrechner sein, welcher üblicherweise zum Durchführen von Fernwartungsvorgängen an den Maschinenrechnern genutzt wird. Auf diese Art und Weise wird kein Servicepersonal vor Ort benötigt und die korrekte Softwareversion kann vom Hersteller über das Internet selbst auf dem Maschinenrechner installiert werden. Alternativ ist es natürlich auch möglich, die passende Betriebssystemsoftware auf einen mobilen Datenträger wie einen USB-Stick oder eine beschreibbare DVD zu speichern und diesen mobilen Datenträger an den Betreiber der Maschine zu verschicken oder mit höheren Kosten verbunden durch Servicepersonal des Herstellers vor Ort auf der Maschine installieren zu lassen. Zu diesem Zweck weist der Maschinenrechner eine entsprechende Schnittstelle oder ein Laufwerk auf, über die die Software über den USB-Stick oder die DVD übertragen werden kann.

Vorteilhafterweise ist außerdem vorgesehen, dass vor der Installation der weiteren Betriebssystemsoftware der Maschinenrechner und/oder der Fernwartungsrechner überprüfen, ob die weitere Betriebssystemsoftware zur Installation auf dem Maschinenrechner geeignet ist. Mit dieser Überprüfung wird vermieden, dass für den Maschinenrechner ungeeignete oder unvollständige Betriebssystemsoftware installiert wird. Dies ist wichtig, da ungeeignete Betriebssystemsoftware zu Fehlfunktionen und insbesondere zu Abstürzen des Maschinenrechners führen können, was eine Inbetriebnahme der Maschine verhindern kann oder beim Betrieb der Maschine mit ungeeigneter Betriebssystemsoftware sogar zu Schäden an der Maschine führen kann. Der Überprüfungsvorgang kann dabei entweder auf dem Fernwartungsrechner vor Versendung der Software an den Maschinenrechner oder auf dem Maschinenrechner selbst vorgenommen werden. Es ist auch möglich, eine doppelte Sicherheit einzubauen und den Überprüfungsvorgang sowohl auf dem Maschinenrechner als auch auf dem Fernwartungsrechner durchzuführen. Bei dieser Überprüfung vergleicht der Rechner die Anforderungen des Maschinenrechners mit der bereitgestellten Betriebssystemsoftware und führt gegebenenfalls Diagnosetests auf dem Maschinenrechner durch, um die Eigenschaften des Maschinenrechners zu ermitteln und die aktuelle Konfiguration zu erfahren. Dies ist insbesondere dann wichtig, wenn die Maschine, was bei Druckmaschinen häufig vorkommt, im Laufe des Betriebs durch neue Module ergänzt und verändert wurde. Häufig sind diese Änderungen dem Hersteller nicht bekannt und werden dann bei der Bereitstellung der Betriebssystemsoftware nicht berücksichtigt. Bei der Überprüfung des Maschinenrechners werden jedoch solche Änderungen erfasst und an den Fernwartungsrechner zurückgemeldet, so dass gegebenenfalls die Betriebssystemsoftware an die Veränderung angepasst wird, bevor sie zur Installation an den Maschinenrechner übertragen wird.

Es ist des Weiteren vorgesehen, dass einem Bediener der Maschine die Installation der weiteren Betriebssystemsoftware auf einer Anzeigevorrichtung signalisiert wird. Während der laufenden Maschine wird der Bediener so informiert, dass eine aktuelle Betriebssystemsoftware zur Installation bereitsteht. Der Bediener kann dann durch Quittierung mit Maus der Installation zustimmen oder diese ablehnen oder auf einen späteren Zeitpunkt verschieben.

Des Weiteren ist es von Vorteil, dass der Maschinenrechner benötigte Softwaremodule der weiteren Betriebssystemsoftware in Abhängigkeit der Eigenschaften des Maschinenrechners und der Maschine auswählt und in der richtigen Reihenfolge installiert. In diesem Fall werden mehr Softwaremodule vom Fernwartungsrechner für den Maschinenrechner bereitgestellt als nötig sind und der Maschinenrechner wählt die benötigten Softwaremodule selbsttätig anhand der Konfiguration der Maschine und des Maschinenrechners aus und installiert sie dann in der richtigen Reihenfolge. Ebenso kann der Maschinenrechner bei fehlerhaften Übertragungen oder fehlende Softwaremodule diese beim Fernwartungsrechner anfordern, um den Installationsvorgang zu vervollständigen. In einer besonders vorteilhaften Ausgestaltung der Erfindung ist vorgesehen, dass der Maschinenrechner bei einem fehlgeschlagenen Start der weiteren Betriebssystemsoftware automatisch einen Neustart mit einer älteren Betriebssystemsoftware durchführt. Auf diese Art und Weise wird sichergestellt, dass die Maschine auf jeden Fall wieder in einen betriebsbereiten Zustand überführt wird, auch wenn in der weiteren Betriebssystemsoftware ein Fehler vorliegt und der Start der weiteren Betriebssystemsoftware fehlgeschlagen ist. Der Bediener muss in diesem Fall keine weiteren Maßnahmen ergreifen, um seine Maschine wieder in einen betriebsfähigen Zustand versetzen zu können.

Weiterhin ist vorgesehen, dass für einen Bediener der Maschine über eine Anzeigevorrichtung eine gewünschte Betriebssystemsoftware auswählbar ist und eine ausgewählte Betriebssystemsoftware anschließend vom Maschinenrechner installiert wird. In diesem Fall werden dem Bediener der Maschine vor der Installation mehrere Versionen oder unterschiedliche Betriebssysteme zur Auswahl angeboten und der Bediener kann das ihm genehme Betriebssystem oder Softwareupdate auswählen, so dass dieses installiert wird. Es ist auch möglich, dass der Bediener mehrere Versionen oder Arten der Betriebssystemsoftware auswählt und dann gleichzeitig in mehreren Partitionen mehrere neue Betriebssystemsoftwareversionen installiert werden. So kann der Bediener selbst entscheiden, welche und wie viele Betriebssystemsoftwareversionen er auf seinem Maschinenrechner installiert haben möchte.

Die vorliegende Erfindung wird nachfolgend anhand mehrerer Figuren näher beschrieben und erläutert. Es zeigen:
- Figur 1: einen Überblick über die beteiligten Komponenten bei der Installation einer weiteren Betriebssystemsoftware,
- Figur 2: einen Überblick über die Verfahrensschritte bei der Installation einer weiteren Betriebssystemsoftware,
- Figur 3a: die Initialisierung eines Installationsauftrags eines weiteren Betriebssystems,
- Figur 3b: die Überprüfung eines Installationsauftrags eines weiteren Betriebssystems,
- Figur 3c: die Übertragung der für die Installation benötigten Betriebssystemsoftware auf den Maschinenrechner,
- Figur 3d: die Aktivierung der weiteren Betriebssystemsoftware auf dem Maschinenrechner und
- Figur 3e: die Auswahl des gewünschten Betriebssystems nach dem Neustart des Maschinenrechners.

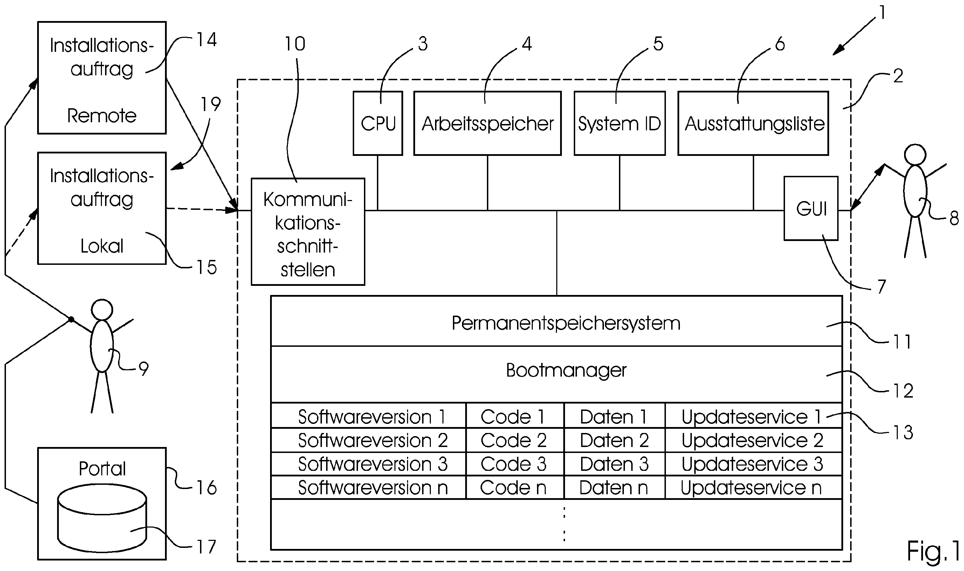

In Figur 1 ist ein Überblick über die an der Installation einer weiteren Betriebssystemsoftware 18 gezeigten Komponenten zu sehen. Die weitere Betriebssystemsoftware 18 wird von einem Servicemitarbeiter 9 beim Hersteller auf einen Fernwartungsrechner 17 bereitgestellt. Dieser Fernwartungsrechner 17 ist über ein Internetserviceportal 16 mit dem Internet verbunden. Auf diese Art und Weise kann der Servicemitarbeiter 9 von seinem Fernwartungsrechner 17 aus die weitere Betriebssystemsoftware 18 über das Internet und eine entsprechende Netzwerkverbindung 10 an einen Steuerungsrechner 2 einer Druckmaschine 1 übertragen. Die Druckmaschine 1 mit dem Steuerungsrechner 2 wird vor Ort von einem Maschinenbediener 8 gesteuert. Dem Maschinenbediener 8 wird das Bereitstellen einer neuen Betriebssystemsoftware 18 über eine grafische Benutzeroberfläche (GUI) 7 auf einem Bildschirm angezeigt. Der Bediener 8 kann dann die Installation der Software 18 bestätigen oder ablehnen. Wenn der Bediener 8 die Installation akzeptiert, wird von dem Fernwartungsrechner 17 automatisch ein Remote-Installationsauftrag 14 erstellt und die für die weitere Betriebssystemsoftware 18 benötigten Software-Komponenten in Abhängigkeit der Erfordernisse des Steuerungsrechners 2 und der Druckmaschine 1 über das Internet an den Steuerungsrechner 2 versendet. Alternativ ist es auch möglich, die weitere Betriebssystemsoftware 18 auf einen Datenträger 19 wie eine USB-Stick oder eine DVD zu übertragen und diesen dann an den Bediener 8 zu verschicken, welcher wiederum den USB-Stick 19 an den Steuerungsrechner 2 anschließt oder die DVD einlegt und den Installationsvorgang startet. Der Steuerungsrechner 2 wird dabei in den meisten Fällen ein Industrie-PC sein, welcher über einen Mikroprozessor (CPU) 3, einen Arbeitsspeicher 4 und eine Festplatte 11 verfügt. Des Weiteren weist der Steuerungsrechner 2 eine System ID 5 auf, welcher eine eindeutige Identifikation des Steuerungsrechners 2 ermöglicht. Auf der Festplatte 11 ist außerdem eine Ausstattungsliste 6 hinterlegt, welche die aktuelle Konfiguration des Steuerungsrechners 2 und der Druckmaschine 1 beinhaltet, so dass bei der Installation immer die aktuelle Konfiguration von Steuerungsrechner 2 und Druckmaschine 1 berücksichtigt werden kann. Mit dem Bediener 8 kann der Steuerungsrechner 2 über einen Bildschirm und eine grafische Benutzeroberfläche (GUI) 7 kommunizieren. Auf dem Festplattenlaufwerk 11 befindet sich außerdem ein Bootmanager 12, welcher beim Herunterfahren oder Neustart des Steuerungsrechners 2 die Auswahl unterschiedlicher Varianten, Typen oder Versionen von Betriebssystemsoftware 13 ermöglicht. Für jede Betriebssystemsoftware 13 ist auf dem Festplattenlaufwerk 11 eine eigene Partition vorhanden, so dass bei der Installation einer weiteren Betriebssystemsoftware 18 jeweils eine neue Partition hinzukommt. Der gesamte Installationsvorgang der weiteren Betriebssystemsoftware 18 läuft dabei während des normalen Betriebs des Steuerungsrechners 2 und der Druckmaschine 1 ab, so dass während des Installationsvorgangs kein Stillstand nötig ist.

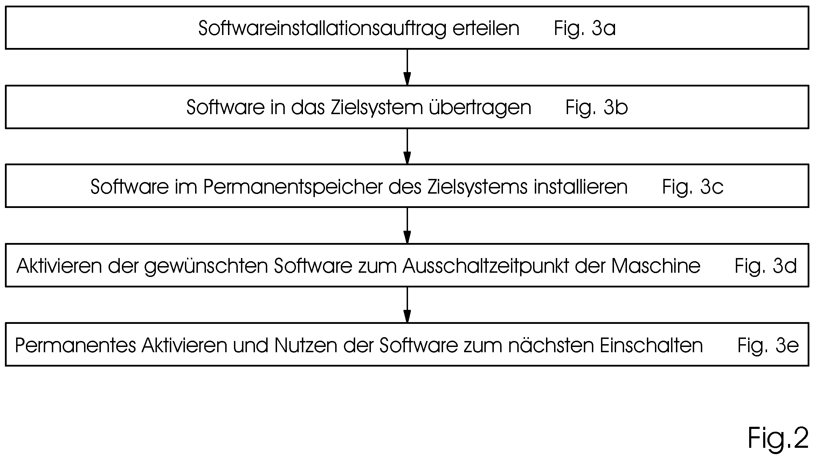

Aus Figur 2 gehen die wesentlichen Schritte der parallelen Installation einer weiteren Betriebssystemsoftware 18mit der bisherigen Software 13 hervor. Zunächst wird ein Softwareinstallationsauftrag 14 erteilt und das neue Betriebssystem 18 an den Steuerungsrechner 2 übertragen. Anschließend wird die neue Betriebssystemsoftware 18 in einer neuen Partition des Festplattenspeichers 11 auf dem Steuerungsrechner 2 installiert. Beim Herunterfahren des Steuerungsrechners 2 kann der Bediener für den Neustart zwischen der bisherigen Betriebssystemsoftware 13 und dem neuen Betriebssystem 18 auswählen. Wenn der Bediener die neue Betriebssystemsoftware 18 auswählt, so wird diese beim nächsten Hochfahren des Steuerungsrechners 2 automatisch aktiviert und bei künftigen Einschaltvorgängen standardmäßig genutzt. Alternativ ist es auch möglich, die Auswahl und Aktivierung der gewünschten Software erst beim Neustart des Maschinenrechners 2 auszuwählen.

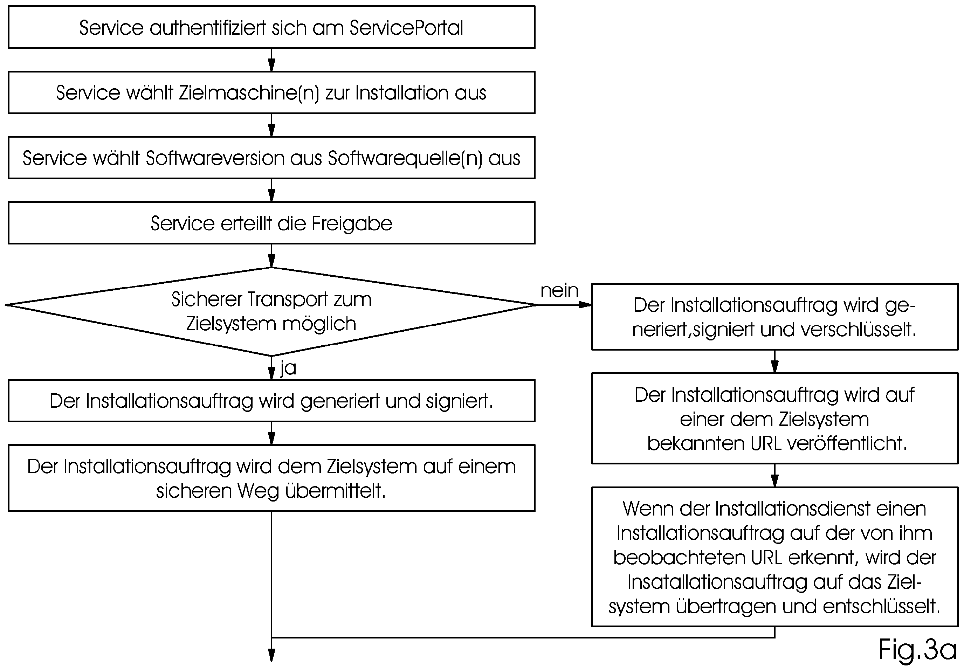

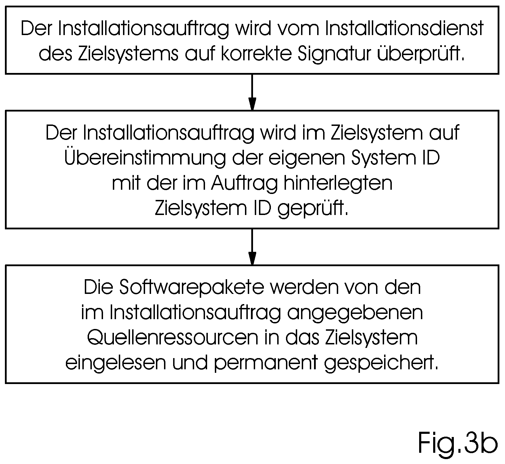

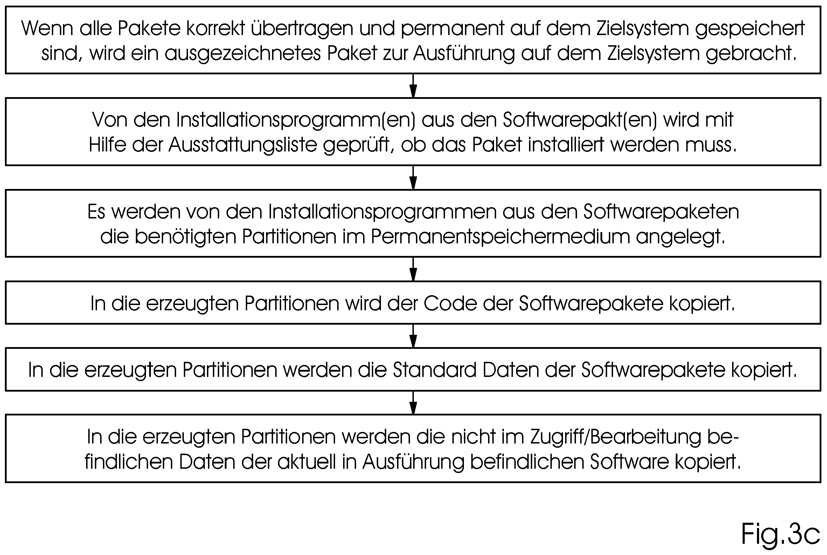

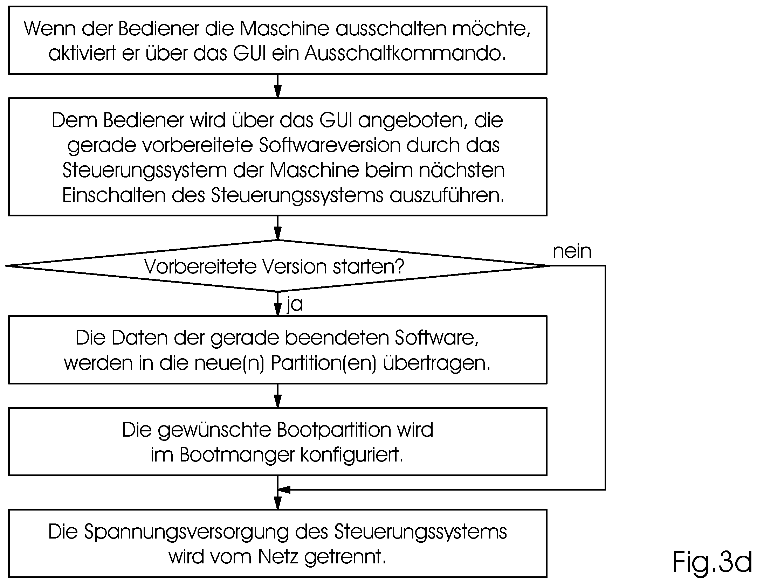

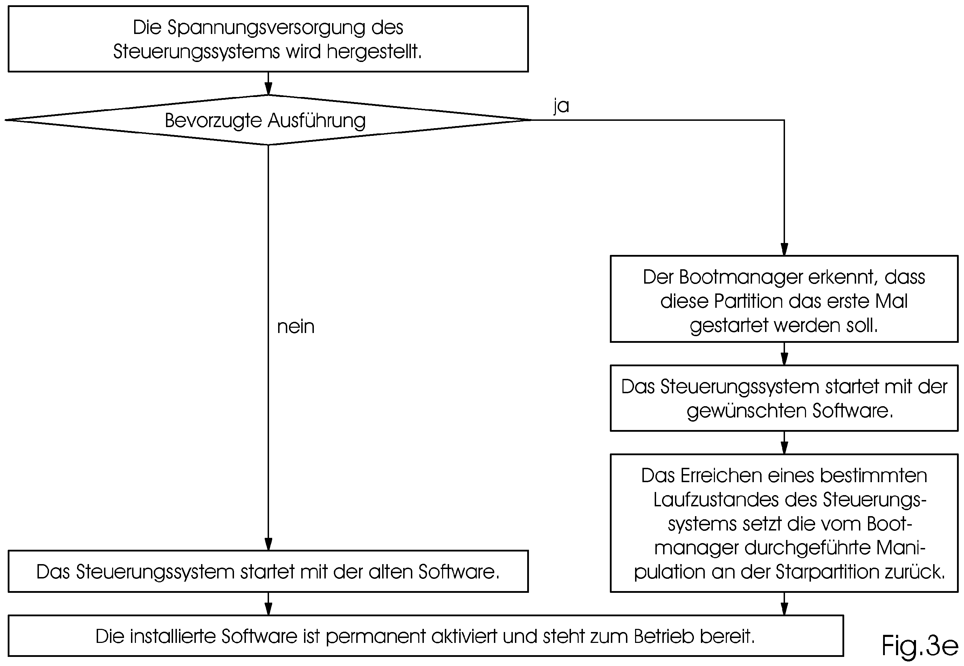

Figur 3 zeigt, auf welche Art und Weise ein Softwareinstallationsauftrag 14 erteilt wird. Beim Hersteller der Druckmaschine 1 oder dem Hersteller der weiteren Betriebssystemsoftware 18 meldet sich ein Servicemitarbeiter 9 am Fernwartungsrechner 17 an. Der Servicemitarbeiter 9 wählt dann alle Druckmaschinen 1 aus, auf welchen die neue Betriebssystemsoftware 18 installiert werden soll. Über das Serviceportal 16 und die Internetverbindung 10 können dann anschließend die Softwarepakete der weiteren Betriebssystemsoftware 18 verschickt werden. Vor der Verteilung der neuen Betriebssystemsoftware 18 wählt der Servicemitarbeiter 9 die passende Betriebssystemsoftware 18 am Fernwartungsrechner 17 aus und erteilt nach einer Überprüfung, ob die weitere Betriebssystemsoftware 18 für die jeweilige Druckmaschine 1 und den zugehörigen Steuerungsrechner 2 geeignet sind, die Freigabe. Wenn ein sicherer Transport zum Steuerungsrechner 2 möglich ist, wird ein Installationsauftrag 14 generiert und signiert und anschließend auf dem sicheren Weg an den Steuerungsrechner 2 verschickt. Falls die Internetverbindung nicht sicher ist, so wird der Installationsauftrag 14 zunächst signiert und verschlüsselt und dann im Internet unter einer dem Steuerungsrechner 2 bekannten Internetadresse (URL) veröffentlicht. Sobald der Installationsdienst auf dem Steuerungsrechner 2 einen Installationsauftrag 14 unter der ihm bekannten Internetadresse (URL) erkennt, wird dieser Installationsauftrag 14 auf den Steuerungsrechner 2 übertragen und entschlüsselt.

Sobald der Installationsauftrag 14 auf den Steuerungsrechner 2 übertragen worden ist, prüft der Installationsdienst des Steuerungsrechners 2, ob die Signatur korrekt ist. Nur bei korrekter Signatur werden die weiteren Überprüfungen in Figur 3b eingeleitet. Dabei überprüft der Installationsdienst als nächstes, ob die ID des Installationsauftrags mit der System ID 5 des Steuerungsrechners 2 übereinstimmt. Nur wenn diese Übereinstimmung gegeben ist, wird die Installation fortgesetzt. In diesem Fall werden die Softwarepakete der weiteren Betriebssystemsoftware 18 von den im Installationsauftrag 14 angegebenen Quellen über das Internet auf den Steuerungsrechner 2 heruntergeladen und dort auf dem Festplattenlaufwerk 11 gespeichert.

Nachdem alle Softwarepakete der neuen Betriebssystemsoftware 18 korrekt übertragen und permanent auf dem Festplattenlaufwerk 11 des Steuerungsrechners 2 gespeichert worden sind, wird ein entsprechend als Startpaket gekennzeichnetes Softwarepaket in einer neuen Partition auf der Festplatte 11 zur Ausführung gebracht. Während der Installation wird überprüft, welches von den Softwarepaketen der Betriebssystemsoftware 18 überhaupt benötigt wird. Zu diesem Zweck vergleicht der Steuerungsrechner 2 die Ausstattungsliste 6 mit den angebotenen Softwarepaketen. Dabei werden nur die Softwarepakete installiert, welche aufgrund der hinterlegten Ausstattungsliste 6 auch benötigt werden. Wie in Figur 3c gezeigt wird für jede weitere Betriebssystemsoftware 18 eine entsprechende Partition auf dem Festplattenlaufwerk 11 angelegt. In die erzeugten Partitionen werden dann die entsprechenden Softwarepakete der weiteren Betriebssystemsoftware 18 kopiert. Nach der Installation der Softwarepakete werden die gerade nicht im Zugriff befindlichen Daten des aktuell in Ausführung befindlichen Betriebssystems 13 kopiert. Die aktuell verwendeten Daten werden später in einem weiteren Schritt hinzugefügt.

In Figur 3d wird der Umschaltvorgang von der alten Betriebssystemsoftware 13 auf das neue Betriebssystem 18 gezeigt. Um die Druckmaschine 1 und den Steuerungsrechner 2 auszuschalten, aktiviert der Bediener 8 in der grafischen Benutzeroberfläche 7 mittels einer Maus ein entsprechendes Feld, welches ein Ausschaltkommando aktiviert. Während des Ausschaltvorgangs bietet die grafische Benutzeroberfläche 7 dem Bediener 8 die Möglichkeit, zwischen verschiedenen Betriebssystemsoftwareversionen 13, 18 zu wählen. Dabei kann der Bediener 8 festlegen, dass beim nächsten Einschalten des Steuerungsrechners 2 die neue Betriebssystemsoftware 18 anstelle des bisherigen Betriebssystems 13 ausgeführt wird. Wenn der Bediener 8 das bisherige Betriebssystem 13 auswählt, wird der Steuerungsrechner 2 ganz normal heruntergefahren und die Spannungsversorgung des Steuerungsrechners vom Netz getrennt. Wählt der Bediener 8 jedoch die neue Betriebssystemsoftware 18 aus, so werden zunächst die Daten, welche sich zuvor noch im Zugriff durch die bisher genutzte Betriebssystemsoftware 13 befunden haben, in die neue Partition der neuen Betriebssystemsoftware 18 übertragen. Anschließend wird die Bootpartition der neuen Betriebssystemsoftware 18 im Bootmanager 12 entsprechend konfiguriert, so dass beim nächsten Neustart anstelle des bisherigen Betriebssystems 13 das neue Betriebssystem 18 gestartet wird. Anschließend wird auch hier die Stromversorgung des Steuerungsrechners 2 unterbrochen und der Steuerungsrechner 2 abgeschaltet.

Figur 3e zeigt den Vorgang des Neustarts des Steuerungsrechners 2. Zunächst wird die Spannungsversorgung zum Steuerungsrechner 2 hergestellt und überprüft, welche Betriebssystemsoftware beim vorhergehenden Ausschalten des Steuerungsrechners 2 für den nächsten Neustart ausgewählt wurde. Wurde die bisherige Betriebssystemsoftware 13 ausgewählt, so startet der Steuerungsrechner 2 mit dieser Version und steuert die Druckmaschine 1 damit. Wurde vor dem Abschalten jedoch die neue Betriebssystemsoftware 18 ausgewählt, so erkennt der Bootmanager 12 diese Auswahl und stellt fest, dass die Betriebssystemsoftware 18 das erste Mal gestartet werden soll. In diesem Fall startet der Steuerungsrechner 2 mit dem neuen Betriebssystem 18 und steuert die Druckmaschine 1 mit dem neuen Betriebssystem 18. Sollte jedoch beim Neustart mit dem neuen Betriebssystem 18 ein kritischer Laufzustand erreicht werden und somit die Funktion des neuen Betriebssystem 18 nicht sichergestellt sein, so schaltet der Bootmanager 12 auf die alte Betriebssystemsoftware 13 zurück, so dass bei einem Neustart bei einer Fehlfunktion der neuen Betriebssystemsoftware 18 automatisch die bisherige zuverlässige Betriebssystemsoftwareversion 13 startet.

Unter den in das neue Betriebssystem 18 übernommenen Anwenderdaten befinden sich Kundenaufträge, Maschineneinstellungen, Systemeinstellungen und weitere Einstellungen. Diese Daten werden auch in der neuen Partition des neuen Betriebssystems 18 gespeichert, so dass eine Beschädigung der Daten des neuen Betriebssystems 18 keine Auswirkungen auf die Daten des alten Betriebssystems 13 hat. Damit ist gewährleistet, dass das alte Betriebssystem 13 weiterhin einwandfrei funktioniert, wenn bei einer Fehlfunktion des neuen Betriebssystems 18 auf die alte Betriebssystemsoftware 13 zurückgegriffen werden soll. Jedes Betriebssystem 13, 18 greift somit nur auf die ihm zugeordneten Daten zu. Auf diese Art und Weise wird ein Höchstmaß an Betriebssicherheit gewährleistet.

### Bezugszeichenliste

- 1: Druckmaschine
- 2: Steuerungsrechner
- 3: CPU
- 4: Arbeitsspeicher
- 5: System ID
- 6: Ausstattungsliste
- 7: grafische Benutzeroberfläche
- 8: Bediener
- 9: Servicemitarbeiter
- 10: Netzwerk
- 11: Festplattenlaufwerk
- 12: Bootmanager
- 13: Betriebssystemsoftware
- 14: Remote-Installationsauftrag
- 15: lokaler Installationsauftrag
- 16: Serviceportal
- 17: Wartungsrechner
- 18: weitere Betriebssystemsoftware
- 19: USB-Stick

## Patentansprüche

1. Verfahren zur Installation eines Betriebssystems zur Steuerung von Maschinen (1) auf einem Maschinenrechner (2), umfassend die nachfolgenden Verfahrensschritte:
- Übertragung eines weiteren Betriebssystems (18) zusätzlich zu dem bereits auf dem Maschinenrechner (2) laufenden Betriebssystem (13), während die Maschine (1) in Betrieb ist,
- Installation des weiteren Betriebssystems (18) auf dem Maschinenrechner (2), während die Maschine (1) in Betrieb ist, wobei das weitere Betriebssystem (18) auf demselben Speichermedium (11) wie das bereits laufende Betriebssystem (13) installiert wird und für jedes Betriebssystem (18) dabei bei der Übertragung eine eigene Partition angelegt wird
- Übernahme von Anwenderdaten des Betriebssystems (13) in das weitere Betriebssystem (18), während die Maschine (1) in Betrieb ist,
- Abschalten des Maschinenrechners (2) und Auswählen beim Wiedereinschalten der Maschine (1) zwischen dem Start des alten Betriebssystems (13) und des neu installierten weiteren Betriebssystems (18).

2. Verfahren nach Anspruch 1,
**dadurch gekennzeichnet,**
**dass** die Auswahlmöglichkeit beim Wiedereinschalten der Maschine (1) mehr als zwei Betriebssysteme (18) umfasst.

3. Verfahren nach einem der vorhergehenden Ansprüche,
**dadurch gekennzeichnet,**
**dass** das weitere Betriebssystem (18) von einem Fernwartungsrechner (17) aus über eine Internetverbindung (10) an den Maschinenrechner (2) übertragen wird.

4. Verfahren nach einem der vorhergehenden Ansprüche,
**dadurch gekennzeichnet,**
**dass** vor der Installation des weiteren Betriebssystems (18) der Maschinenrechner (2) und/oder der Fernwartungsrechner (17) überprüfen, ob das weitere Betriebssystem (18) zur Installation auf dem Maschinenrechner (2) geeignet ist.

5. Verfahren nach einem der vorhergehenden Ansprüche,
**dadurch gekennzeichnet,**
**dass** einem Bediener (8) der Maschine (2) die Installation des weiteren Betriebssystems (18) auf einer Anzeigevorrichtung (7) signalisiert wird.

6. Verfahren nach einem der vorhergehenden Ansprüche,
**dadurch gekennzeichnet,**
**dass** der Maschinenrechner (2) benötigte Softwaremodule des weiteren Betriebssystems (18) in Abhängigkeit der Eigenschaften des Maschinenrechners (2) und der Maschine (1) auswählt und in der richtigen Reihenfolge installiert.

7. Verfahren nach einem der vorhergehenden Ansprüche,
**dadurch gekennzeichnet,**
**dass** der Maschinenrechner (2) bei einem fehlgeschlagenen Start des weiteren Betriebssystems (18) automatisch einen Neustart mit einem älteren Betriebssystem (13) durchführt.

8. Verfahren nach einem der vorhergehenden Ansprüche,
**dadurch gekennzeichnet,**
**dass** für einen Bediener (8) der Maschine (1) über eine Anzeigevorrichtung (7) ein gewünschtes Betriebssystem (18, 13) auswählbar ist und ein ausgewähltes Betriebssystem (18, 13) anschließend vom Maschinenrechner (2) installiert wird.

9. Verfahren nach einem der vorhergehenden Ansprüche,
**dadurch gekennzeichnet,**
**dass** das weitere Betriebssystem (18) zumindest teilweise auf einem mobilen Datenträger (19) gespeichert ist und über eine entsprechende Schnittstelle lokal auf dem Maschinenrechner (2) installiert wird.

## Claims

1. Method for installing an operating system for controlling machinery (1) on a machine computer (2) comprising the following steps of
- transmitting a further operating system (18) in addition to the operating system (13) already running on the machine computer (2) while the machine (1) is in operation,
- installing the further operating system (18) on the machine computer (2) while the machine (1) is in operation, wherein the further operating system (18) is installed on the same memory medium (11) as the operating system (13) that is already running and wherein a separate partition is created for every operating system (18) in the transmission process,
- taking over user data of the operating system (13) into the further operating system (18) while the machine (1) is in operation,
- switching off the machine computer (2), and, when the machine (1) is switched on again, selecting between starting the old operating system (13) and starting the newly installed further operating system (18).

2. Method according to claim 1,
**characterized in**
**that** the options for selection when the machine (1) is switched on again comprise more than two operating systems (18).

3. Method according to any one of the preceding claims,
**characterized in**
**that** the further operating system (18) is transmitted from a remote service computer (17) to the machine computer (2) via an internet connection (10).

4. Method according to any one of the preceding claims,
**characterized in**
**that** prior to the installation of the further operating system (18), the machine computer (2) and/or the remote service computer (17) check whether the further operating system (18) is suitable for installation on the machine computer (2).

5. Method according to any one of the preceding claims,
**characterized in**
**that** an operator (8) of the machine (2) is informed of the installation of the further operating system (18) on a display device (7).

6. Method according to any one of the preceding claims,
**characterized in**
**that** the machine computer (2) selects required software modules of the further operating system (18) as a function of the properties of the machine computer (2) and of the machine (1) and installs them in the correct order.

7. Method according to any one of the preceding claims,
**characterized in**
**that** when starting up the further operating system (18) fails, the machine computer (2) automatically carries out a restart with an older operating system (13).

8. Method according to any one of the preceding claims,
**characterized in**
**that** a desired operating system (18, 13) is selectable by an operator (8) of the machine (1) by means of a display device (7) and a selected operating system (18, 13) is subsequently installed by the machine computer (2).

9. Method according to any one of the preceding claims,
**characterized in**
**that** the further operating system (18) is at least partly stored on a mobile data carrier (19) and is locally installed on the machine computer (2) via a corresponding interface.

## Revendications

1. Procédé pour l'installation d'un système d'exploitation pour la commande de machines (1) sur un ordinateur de machine (2) comprenant les étapes de procédé suivantes :
- transmission d'un autre système d'exploitation (18) en plus du système d'exploitation (13) tournant déjà sur l'ordinateur (2) de la machine (1) en cours de fonctionnement pendant le fonctionnement de la machine (1),
- installation de l'autre système d'exploitation (18) sur un ordinateur de machine (2) en cours de fonctionnement de la machine (1), l'autre système d'exploitation (18) étant installé sur le même support de stockage (11) que le système d'exploitation existant (13) et pour chaque système d'exploitation (18) une partition dédiée étant déposée lors de la transmission ;
- prise en charge de données d'application du système d'exploitation (13) dans l'autre système d'exploitation (18) avec un système d'exploitation plus ancien (13) pendant que la machine (1) est en service,
- déconnexion de l'ordinateur de machine (2) et sélection et redémarrage de la machine (1) entre le départ de l'ancien système d'exploitation (13) et le nouveau système d'exploitation installé (18).

2. Procédé selon la revendication 1,
**caractérisé en ce**
**que** la possibilité de sélection comporte plus de deux systèmes d'exploitation (18) au redémarrage de la machine (1).

3. Procédé selon l'une des revendications précédentes,
**caractérisé en ce**
**que** l'autre système d'exploitation (18) est transmis depuis un ordinateur distant (17) par une connexion internet (10) à l'ordinateur de machine (2).

4. Procédé selon l'une des revendications précédentes,
**caractérisé en ce**
**qu'**avant l'installation de l'autre système d'exploitation (18), l'ordinateur de machine (2) et/ou l'ordinateur distant (17) contrôlent si l'autre système d'exploitation (18) est compatible pour une installation sur l'ordinateur (2) de la machine.

5. Procédé selon l'une des revendications précédentes,
**caractérisé en ce**
**que** l'installation de l'autre système d'exploitation (18) est signalisée sur un dispositif d'affichage (7) à un utilisateur (8) de la machine (2).

6. Procédé selon l'une des revendications précédentes,
**caractérisé en ce**
**que** l'ordinateur (2) de la machine sélectionne entre autres des modules de logiciel de l'autre système d'exploitation (18) en fonction des propriétés de l'ordinateur (2) de la machine et les installe dans le bon ordre.

7. Procédé selon l'une des revendications précédentes,
**caractérisé en ce**
**que** l'ordinateur (2) de la machine exécute automatiquement un redémarrage avec un ancien système d'exploitation plus ancien (13) en cas d'échec de départ de l'autre système d'exploitation (18).

8. Procédé selon l'une des revendications précédentes,
**caractérisé en ce**
**qu'**un utilisateur (8) de la machine 1 peut sélectionner par un dispositif d'affichage (7) un système d'exploitation souhaité (18, 13) et un système d'exploitation sélectionné (18, 13) est ensuite installé ensuite par l'ordinateur de l'ordinateur (2) de la machine.

9. Procédé selon l'une des revendications précédentes,
**caractérisé en ce**
**que** l'autre système d'exploitation (18) est stocké au moins partiellement sur un support de données mobile (19) et est installé localement sur l'ordinateur (2) de la machine par une interface correspondante.
